# FASCICULE DE BREVET EUROPEEN

(11) **EP 1 655 626 B1**
(45) Date de publication et mention de la délivrance du brevet: **03.09.2008**
(21) Numéro de dépôt: 06075281.3
(22) Date de dépôt: 16.12.2003
(51) Int. Cl.: G02B 6/02, H04B 10/18

(54) **Fibre optique monomode à dispersion chromatique optimisée**
Optische Monomodefaser mit optimierter chromatische Dispersion
Optical monomode fibre with optimised chromatic dispersion

(30) Priorité: 24.12.2002 FR 0216614
(43) Date de publication de la demande: 10.05.2006
(62) Demande divisionnaire de: 03293180.0
(73) Titulaire: Draka Comteq B.V., 1083 HJ Amsterdam (NL)
(72) Inventeur: De Montmorillon, Louis-Anne, 78000 Versailles (FR); Sillard, Pierre, 78150 Le Chesnay (FR); Expert, Lionel, 75017 Paris (FR); Molin, Denis, 91210 Draveil (FR); Fleury, Ludovic, 78730 Saint Arnault en Yvelines (FR); Dany, Bruno, 78600 Maisons-Laffitte (FR)
(74) Mandataire: Blokland, Arie

(56) Documents cités:
- EP-A- 1 018 656
- EP-A- 1 103 830
- EP-A- 1 211 533
- EP-A- 1 279 648
- EP-A- 1 288 685
- EP-A- 1 291 688
- LIU Y ET AL: "DESIGN AND FABRICATION OF LOCALLY DISPERSION-FLATTENED LARGE EFFECTIVE AREA FIBERS" PROCEEDINGS OF THE EUROPEAN CONFERENCE ON OPTICAL COMMUNICATION, XX, XX, vol. 1, 20 septembre 1998 (1998-09-20), pages 37-38, XP000879650

## Description

L'invention concerne le domaine des fibres optiques pour réseaux de transmission à multiplexage en longueur d'onde (WDM). Les réseaux de transmission WDM visés sont plus particulièrement les réseaux dits « métropolitains ». Les réseaux métropolitains concernent des longueurs de transmission typiquement comprises entre quelques kilomètres, par exemple 10 km, et environ 300 km.

L'invention vise l'obtention d'une fibre optique représentant un très bon compromis pour ce type de réseau. Ce compromis intègre principalement, pour la distance considérée, des contraintes d'effet non linéaire amenant de la distortion dans le signal véhiculé, des contraintes de perte de signal atténuant le signal véhiculé, et des contraintes de coût de réalisation de la fibre optique considérée et du système de transmission global. Plus précisément, l'invention vise l'obtention d'une fibre optique relativement simple et peu coûteuse à réaliser, présentant une surface effective élevée, supérieure à 50 µm² à la longueur d'onde de 1550 nm, permettant ainsi de diminuer l'impact des effets non-linéaires, et utilisable sur la plus grande partie possible de l'ensemble des bandes S, C et L s'étendant respectivement de 1460 nm à 1520 nm, de 1520 nm à 1565 nm, de 1565 nm à 1625 nm, l'invention visant aussi l'obtention d'une fibre optique qui soit monomode sur les bandes S, C et L, et qui offre une bonne résistance aux effets non linéaires sur ces bandes spectrales. L'invention vise également l'obtention d'une fibre optique qui puisse être utilisée dans un système de transmission même en l'absence de tous moyens de compensation de la dispersion chromatique de ladite fibre optique. Sur une grande partie de l'ensemble des bandes S, C et L, de préférence sur l'intégralité de ces trois bandes S, C et L, la dispersion chromatique doit rester à la fois suffisamment faible pour ne pas nécessiter de compensation de dispersion chromatique et suffisamment élevée pour ne pas induire d'effets non linéaires dégradant notablement la transmission. L'invention vise l'obtention d'une fibre optique simple et peu coûteuse à réaliser, présentant une surface effective supérieure à 50µm² à la longueur d'onde de 1550 nm, et dans une mode de réalisation préférentiel une dispersion comprise entre 2 et 9 ps/nm.km sur une plage de longueurs d'onde s'étendant de 1460 nm à 1625 nm, ainsi que des pertes par courbure acceptables. Des pertes par courbure acceptables restent avantageusement inférieures à 100 dB/m pour un diamètre de 20 mm à une longueur d'onde valant 1625 nm ou bien encore avantageusement inférieures à 30 dB/m pour un diamètre de 20 mm à une longueur d'onde valant 1550 nm.

L'invention vise donc l'obtention d'une fibre optique qui soit monomode et utilisable sur une large bande spectrale, tout en minimisant les effets non linéaires et tout en ne nécessitant pas nécessairement de moyens de compensation de dispersion chromatique lorsqu'utilisée dans un réseau métropolitain, en ayant également des pertes par courbure acceptables. Pour cela, la fibre optique selon l'invention possède une plage étroite optimisée de dispersion chromatique, ainsi qu'un seuil maximum de pente de dispersion chromatique et qu'un seuil maximum de rapport entre la dispersion chromatique et la pente de dispersion chromatique, ainsi également qu'une ou deux gaines suffisamment enterrées.

Les fibres optiques comprennent un coeur de profil d'indice variable et une gaine d'indice constant. Le coeur comporte plusieurs tranches pouvant avoir différentes formes possibles, notamment une forme rectangulaire, triangulaire, trapézoïdale ou en alpha, être par ailleurs tronquée et / ou avoir un piédestal. L'invention vise l'obtention d'une fibre optique simple et peu coûteuse à réaliser. Pour cela, la fibre optique selon l'invention sera limitée à trois tranches. Le profil à trois tranches est le plus simple structurellement mais il oblige à enterrer beaucoup la seule tranche enterrée. La tranche centrale est surélevée, au contraire des profils coaxiaux lesquels ont un creux central étendu. Toujours dans le souci d'obtenir une fibre optique simple et peu coûteuse à réaliser, selon l'invention la pente de dispersion chromatique ne doit pas être choisie trop faible car sinon la fibre optique devient trop couteuse à réaliser. Le seuil minimum de pente de dispersion choisi est un aspect important de l'invention qui ouvre la voie à l'obtention du compromis recherché qui sans cela se révèle trop difficile à obtenir. Un seuil minimal préférentiel un peu plus élevé que le précédent permet une obtention plus simple d'une fibre optique selon l'invention ayant des propriétés optiques comparables à celle obtenue en restant proche du seuil minimum le plus bas.

La plage étroite de dispersion chromatique revendiquée, la plage étroite de pente de dispersion chromatique revendiquée, le caractère suffisamment enterré de la tranche enterrée par rapport à la hauteur de la tranche centrale, le seuil maximum de longueur d'onde de dispersion nulle, ainsi que le nombre limité de tranches, constituent les caractéristiques essentielles de l'invention permettant l'obtention du bon compromis qui est recherché pour la fibre optique principalement destinée à être utilisée dans un système de transmission métropolitain. D'autres caractéristiques optionnelles préférentielles permettent encore d'améliorer ledit bon compromis pour aller vers un très bon voire un excellent compromis.

Aucun des arts antérieurs cités et analysés ci-après ne possède toutes les caractéristiques de l'invention ni ne parvient à obtenir un compromis optimal comme celui recherché par l'invention.

Selon un art antérieur par exemple décrit dans la demande de brevet française FR 0002316, au niveau de l'exemple I, il est connu une fibre optique qui présente notamment l'inconvénient d'une pente de dispersion chromatique trop basse pour obtenir le compromis recherché, le coût de revient d'une fibre optique étant reliée de manière inversement proportionnelle à la valeur de la pente de dispersion chromatique pour de faibles pentes de dispersion chromatique, une très faible pente de dispersion chromatique entraînant une extrême sensibilité des propriétés optiques par rapport aux variations même légères de réalisation du profil d'indice de la fibre optique.

Selon un autre antérieur par exemple décrit dans la demande de brevet internationale WO 02/14919, au niveau de l'exemple 4, il est connu une fibre optique qui présente notamment l'inconvénient d'une pente de dispersion chromatique trop élevée et de tranches enterrées insuffisamment enterrées pour obtenir le compromis recherché.

Selon un autre antérieur par exemple décrit dans la demande de brevet européenne EP 1189082, au niveau de l'exemple 1, il est connu une fibre optique qui présente notamment l'inconvénient d'une pente de dispersion chromatique trop élevée et de tranches enterrées insuffisamment enterrées pour obtenir le compromis recherché.

Selon un autre antérieur par exemple décrit dans la demande de brevet européenne EP 1189082, au niveau de l'exemple 5, il est connu une fibre optique qui présente notamment l'inconvénient d'une dispersion chromatique trop faible et de tranches enterrées insuffisamment enterrées pour obtenir le compromis recherché.

Selon un autre antérieur par exemple décrit dans la demande de brevet européenne EP 1189082, au niveau des exemples 10 et « trial sample 3 », il est connu une fibre optique qui présente notamment l'inconvénient d'une pente de dispersion chromatique trop élevée, d'une dispersion chromatique trop faible et de tranches enterrées insuffisamment enterrées pour obtenir le compromis recherché.

Selon un autre antérieur par exemple décrit dans la demande de brevet européenne EP 1211533, au niveau des exemples « comparative example 4 », « comparative example 9 », « comparative example 10 », « comparative example 11 » et « comparative example 12 », il est connu une fibre optique qui présente notamment l'inconvénient d'une dispersion chromatique trop élevée et de tranches enterrées insuffisamment enterrées pour obtenir le compromis recherché.

Selon un autre antérieur par exemple décrit dans la demande de brevet européenne EP 1146358, au niveau de l'exemple 18, il est connu une fibre optique qui présente notamment l'inconvénient d'une dispersion chromatique trop élevée et de tranches enterrées insuffisamment enterrées pour obtenir le compromis recherché.

Selon un autre antérieur par exemple décrit dans la demande de brevet européenne EP 1146358, au niveau de l'exemple 22, il est connu une fibre optique qui présente notamment l'inconvénient de tranches enterrées insuffisamment enterrées pour obtenir le compromis recherché et qui présente des pertes par courbure substantiellement plus importantes que celles de la fibre optique selon l'invention.

Selon un autre antérieur par exemple décrit dans la demande de brevet européenne EP 1130828, au niveau des exemples 1 et 3, il est connu une fibre optique qui présente notamment l'inconvénient d'une surface effective à 1550 nm qui est trop faible ; de plus aucun profil n'est précisé.

Selon un autre antérieur par exemple décrit dans la demande de brevet européenne EP 1130828, au niveau des exemples 2 et 4, il est connu une fibre optique qui présente notamment l'inconvénient d'une pente de dispersion chromatique trop faible; de plus, aucun profil n'est précisé.

Selon un autre antérieur par exemple décrit dans la demande de brevet européenne EP 98117828.8, au niveau des l'exemple 2 et 3, il est connu une fibre optique qui présente notamment l'inconvénient de tranches enterrées insuffisamment enterrées pour obtenir le compromis recherché et qui semble présenter des pertes par courbure substantiellement plus importantes que celles de la fibre optique selon l'invention.

Selon un autre antérieur par exemple décrit dans la demande de brevet européenne EP 98117828.8, au niveau de l'exemple 4, il est connu une fibre optique qui présente notamment l'inconvénient d'une dispersion chromatique trop faible et de tranches enterrées insuffisamment enterrées pour obtenir le compromis recherché.

Selon un autre antérieur par exemple décrit dans la demande de brevet européene EP 1 018 656, il est connu une fibre optique monomode à dispersion décalée, que présente, dans une plage de longueur d'ondes de 1400 à 1650 nm, un maximum de la dispersion chromatique et une pente de dispersion chromatique en valeur absolue inférieur à 0,05 ps/nm².km.

Selon un autre antérieur par exemple décrit dans la demande de brevet européenne EP 98117828.8, au niveau de l'exemple 5, il est connu une fibre optique qui présente notamment l'inconvénient d'une pente de dispersion chromatique trop élevée, d'une dispersion chromatique trop faible et de tranches enterrées insuffisamment enterrées pour obtenir le compromis recherché.

Pour obtenir le compromis recherché il est prévu une fibre optique, pour réseau de transmission à multiplexage en longueur d'onde selon la revendication 1.

Afin d'améliorer le compromis recherché, notamment pour augmenter la surface effective de la fibre optique obtenue sans trop dégrader la simplicité et le coût de fabrication de ladite fibre optique, le rapport entre la valeur absolue de l'indice minimum de la tranche enterrée et l'indice maximum de la tranche centrale est de préférence compris entre 60 % et 90 %.

La longueur d'onde de coupure en câble, communément notée λ_{cc}, de la fibre optique obtenue, est choisie inférieure à 1450 nm de manière à pouvoir être monomode en bandes S, C et L. Afin de mieux maîtriser la longueur d'onde de coupure en câble, l'indice maximum de la tranche annulaire reste préférentiellement inférieur à 3.10⁻³. Dans un mode de réalisation préférentiel, dans le but de pouvoir utiliser la fibre optique selon l'invention à la fois comme fibre optique de transmission et comme fibre optique d'accès dans un même système associant un réseau de transmission métropolitain et un réseau d'accès, les rayons et les indices de chacune des tranches sont déterminés de manière à ce que la fibre optique présente une longueur d'onde de coupure en câble inférieure à 1260 nm. L'invention concerne aussi dans ce mode de réalisation préférentiel l'association d'une part d'un réseau de transmission métropolitain sur une distance inférieure à 350 km et d'autre part d'un réseau d'accès, comportant respectivement des fibres optiques de transmission et des fibres optiques d'accès, dont au moins certaines des fibres optiques de transmission et dont au moins certaines des fibres optiques d'accès sont des fibres optiques dont la longueur d'onde de coupure en câble est inférieure à 1260 nm. De préférence, toutes les fibres optiques de transmission et toutes les fibres optiques d'accès sont des fibres optiques dont la longueur d'onde de coupure en câble est inférieure à 1260 nm.

Afin d'améliorer le compromis recherché, en rendant la fibre optique moins coûteuse à réaliser et pratiquement aussi performante, les rayons et les indices de chacune des tranches sont de préférence déterminés de manière à ce que la fibre optique présente, à la longueur d'onde de 1550 nm, une pente de dispersion chromatique comprise entre 0,025 ps/nm².km et 0,035 ps/nm².km. De manière avantageuse, les rayons et les indices de chacune des tranches sont déterminés de manière à ce que la fibre optique présente, à la longueur d'onde de 1550 nm, une dispersion chromatique comprise entre 4,5 ps/nm.km et 5,5 ps/nm.km.

De préférence, pour que la fibre optique selon l'invention soit utilisable sur toute la bande S avec une faible dégradation causée par les effets non linéaires, les rayons et les indices de chacune des tranches sont déterminés de manière à ce que la fibre optique présente, à la longueur d'onde de 1460 nm, une dispersion chromatique supérieure à 2 ps/nm.km.

Dans une réalisation préférentielle, les rayons et les indices de chacune des tranches sont déterminés de manière à ce que la fibre optique présente une longueur d'onde de dispersion nulle comprise entre 1375 nm et 1415 nm, de manière à obtenir une dispersion au voisinage de 5 ps/nm.km et une pente de dispersion au voisinage de 0,03 ps/nm².km.

De manière à simplifier davantage la réalisation de la fibre optique selon l'invention, de préférence, aucune tranche ne présente plusieurs plateaux de valeur d'indice en fonction du rayon, c'est-à-dire que si les tranches peuvent avoir diverses formes, aucune tranche n'est en escalier avec plusieurs marches. De préférence toutes les tranches ne comportent chacune qu'un seul plateau, les transitions entre plateaux pouvant toutefois être penchées c'est-à-dire n'être pas verticales.

L'invention concerne également un système de transmission sur une distance inférieure à 350 km, comportant au moins une fibre optique selon l'invention et ne comportant pas de moyens de compensation de dispersion chromatique de ladite fibre optique. Les moyens usuels de compensation de dispersion chromatique sont notamment les fibres optiques à compensation de dispersion chromatique, qu'elles soient en module ou en câble, ils peuvent également se présenter sous la forme de composants optiques. De préférence, la fibre optique selon l'invention est utilisée en longueur supérieure à 1 km. Dans les cas où la fibre optique selon l'invention serait tout de même utilisée avec des moyens de compensation, par exemple une fibre optique à compensation de dispersion, il ne faudrait qu'une longueur peu importante de cette fibre optique à compensation de dispersion pour compenser efficacement la dispersion chromatique de la fibre optique selon l'invention.

L'invention sera mieux comprise et d'autres particularités et avantages apparaîtront à l'aide de la description ci-après et des dessins joints, donnés à titre d'exemples, où:
- la figure 1 représente schématiquement un exemple de type de profil à trois tranches d'une fibre optique selon l'invention;
- la figure 2 représente un tableau comprenant les valeurs de rayons et de différences d'indice pour sept exemples de profils à trois tranches d'une fibre optique selon l'invention;
- la figure 3 représente un tableau comprenant certaines caractéristiques des profils de fibre optique selon l'invention définis à la figure 2;
- la figure 4 représente un tableau comprenant d'autres caractéristiques des profils de fibre optique selon l'invention définis à la figure 2.

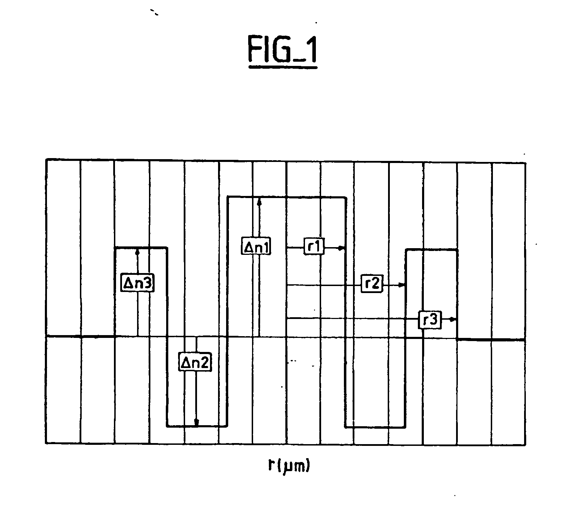

La figure 1 représente schématiquement un exemple de type de profil à trois tranches d'une fibre optique selon l'invention. La première tranche appelée tranche centrale présente une différence maximale d'indice Δn1 avec l'indice constant de la gaine et un rayon extérieur r1. La différence d'indice maximale Δn1 est positive. De préférence, entre un rayon nul et le rayon r1, l'indice est constant. La deuxième tranche appelée tranche enterrée présente une différence maximale d'indice Δn2 avec l'indice constant de la gaine et un rayon extérieur r2. La différence d'indice maximale Δn2 est négative. De préférence, entre le rayon r1 et le rayon r2, l'indice est constant. La troisième tranche appelée tranche annulaire présente une différence maximale d'indice Δn3 avec l'indice constant de la gaine et un rayon extérieur r3. La différence d'indice maximale Δn3 est positive. De préférence, entre le rayon r2 et le rayon r3, l'indice est constant.

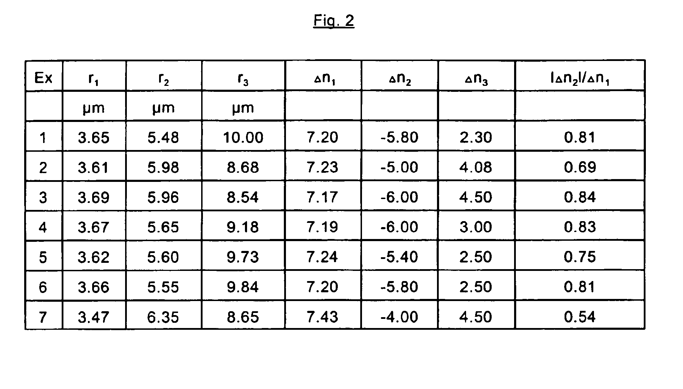

La figure 2 représente un tableau comprenant les valeurs de rayons et de différences d'indice pour sept exemples notés Ex de profils à trois tranches d'une fibre optique selon l'invention. La colonne de gauche comprend la dénomination des exemples de 1 à 7. Les trois colonnes suivantes expriment en µm des rayons du profil d'indice variable de coeur. Les trois colonnes suivantes expriment mille fois des différences d'indice (sans unité). La colonne suivante exprime le rapport entre d'une part la valeur absolue de l'indice minimum de la tranche enterrée et d'autre part l'indice maximum de la tranche centrale.

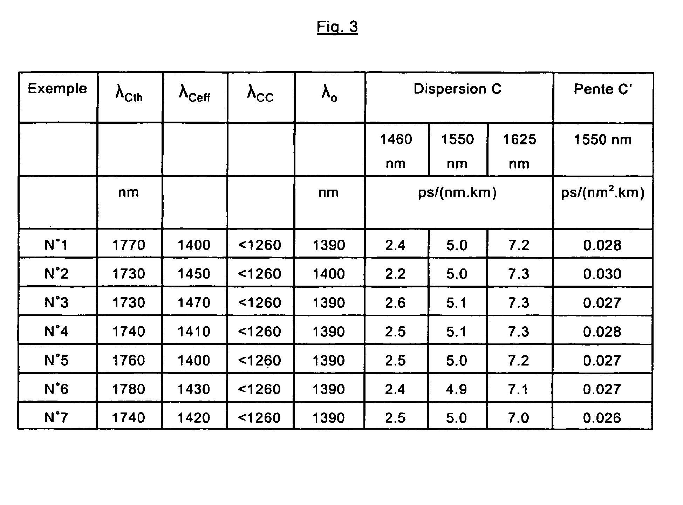

La figure 3 représente un tableau comprenant certaines caractéristiques des profils de fibre optique selon l'invention définis à 10 figure 2. La colonne de gauche comprend la dénomination des exemples du n°1 au n°7. Pour chaque exemple considéré, les autres colonnes représentent des caractéristiques de la fibre optique correspondant à l'exemple considéré. La colonne suivante représente la longueur de coupure théorique λ_{cth} exprimée en nm. La colonne suivante représente la longueur de coupure effective λ_{ceff} exprimée en nm. La colonne suivante représente un seuil maximum de longueur d'onde de coupure en câble λ_{cc} exprimée en nm. La longueur d'onde de coupure en câble et la longueur d'onde de coupure effective sont définies dans la norme ITU G 650. Les trois colonnes suivantes représentent la dispersion chromatique C exprimée en ps/nm.km, aux longueurs d'onde valant respectivement 1460 nm, 1550 nm et 1625 nm. La colonne suivante représente la pente de dispersion chromatique C' exprimée en ps/nm².km à une longueur d'onde valant 1550 nm.

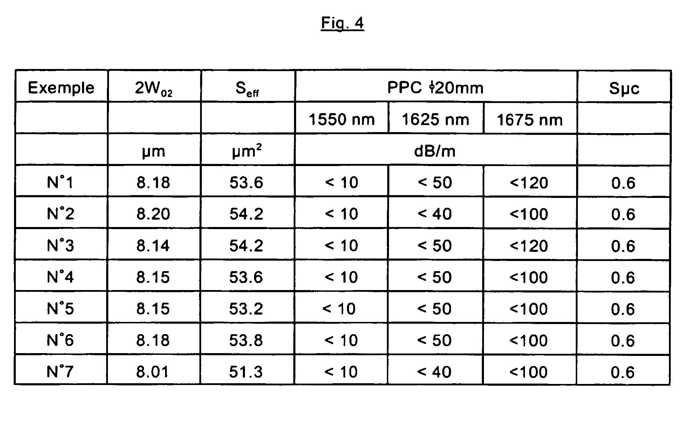

La figure 4 représente un tableau comprenant d'autres caractéristiques des profils de fibre optique selon l'invention définis à la figure 2. La colonne de gauche comprend la dénomination des exemples du n°1 au n°7. Pour chaque exemple considéré, les autres colonnes représentent des caractéristiques de la fibre optique correspondant à l'exemple considéré. La colonne suivante représente le diamètre de mode 2W₀₂ exprimé en µm à la longueur d'onde de 1550 nm. La colonne suivante représente la surface effective S_{eff} exprimée en µm² à la longueur d'onde de 1550 nm. Les trois colonnes suivantes représentent les seuils maximum de pertes par courbure exprimées en dB/m, lorsque la fibre optique est enroulée sur un diamètre de 20 mm, respectivement aux longueurs d'onde de 1550 nm, de 1625 nm et de 1675 nm. Compte-tenu des faibles pertes par courbure à 1675 nm, les fibres optiques selon l'invention resteraient utilisables dans la bande U s'étendant de 1625 nm à 1675 nm. La dernière colonne représente la sensibilité aux microcourbures, à une longueur d'onde de 1550 nm, donnée en proportion par rapport à la fibre G652 commercialisée par la demanderesse sous cette référence. Les exemples à trois tranches n°1 à n°7 présentent en moyenne des pertes par courbure et microcourbure à une longueur d'onde de 1550 nm qui sont plus faibles.

## Revendications

1. Fibre optique, pour réseau de transmission à multiplexage en longueur d'onde, comportant successivement du centre vers la périphérie un coeur présentant un profil d'indice variable puis une gaine d'indice constant,
le profil d'indice variable du coeur étant successivement constitué, du centre vers la périphérie,
d'une tranche centrale d'indice maximum supérieur à l'indice de la gaine,
d'une tranche enterrée d'indice minimum inférieur à l'indice de la gaine, d'une tranche annulaire d'indice maximum supérieur à l'indice de la gaine et inférieur à l'indice maximum de la tranche centrale, **caractérisée en ce que**
le rapport entre la valeur absolue de l'indice minimum de la tranche enterrée et l'indice maximum de la tranche centrale étant supérieur à 50 %,
l'indice de la tranche centrale valant au moins 70 % de l'indice maximum de la tranche centrale en au moins un endroit situé à moins d'1 µm du centre de la fibre optique,
les rayons et les indices de chacune des tranches étant déterminés de manière à ce que la fibre optique présente,
d'une part à la longueur d'onde de 1550 nm,
premièrement une dispersion chromatique comprise entre 4 ps/nm.km et 6 ps/nm.km,
deuxièmement une pente de dispersion chromatique comprise entre 0,02 ps/nm².km et 0,04 ps/nm².km,
troisièmement un rapport entre la dispersion chromatique et la pente de dispersion chromatique inférieur à 240 nm,
quatrièmement une surface effective supérieure à 50 µm²
et d'autre part,
premièrement une longueur d'onde de dispersion nulle inférieure à 1460 nm,
deuxièmement une longueur d'onde de coupure en câble inférieure à 1450 nm, le rayon (r₁) de la partie centrale est comprise entre 3,47 µm-3,69 µm, le rayon (r₂) de la tranche enterrée (r₂) est comprise entre 5,48 µm-6,35 µm et le rayon (r₃) de la tranche annulaire (r₃) est comprise entre 8,54 µm-10,00 µm.

2. Fibre optique selon la revendication 1, **caractérisée en ce que** le rapport entre la valeur absolue de l'indice minimum de la tranche enterrée et l'indice maximum de la tranche centrale est compris entre 60 % et 90 %.

3. Fibre optique selon la revendication 1 ou 2, **caractérisée en ce que** l'indice maximum de la tranche annulaire est inférieur à 3.10⁻³.

4. Fibre optique selon l'une quelconque des revendication précédentes, **caractérisée en ce que** les rayons et les indices de chacune des tranches sont déterminés de manière à ce que la fibre optique présente, à la longueur d'onde de 1550 nm, une pente de dispersion chromatique comprise entre 0,025 ps/nm².km et 0,035 ps/nm².km.

5. Fibre optique selon l'une quelconque des revendications précédentes, **caractérisée en ce que** les rayons et les indices de chacune des tranches sont déterminés de manière à ce que la fibre optique présente, à la longueur d'onde de 1550 nm, une dispersion chromatique comprise entre 4,5 ps/nm.km et 5,5 ps/nm.km.

6. Fibre optique selon l'une quelconque des revendications précédentes, **caractérisée en ce que** les rayons et les indices de chacune des tranches sont déterminés de manière à ce que la fibre optique présente une longueur d'onde de coupure en câble inférieure à 1260 nm.

7. Fibre optique selon l'une quelconque des revendications précédentes, **caractérisée en ce que** les rayons et les indices de chacune des tranches sont déterminés de manière à ce que la fibre optique présente, à la longueur d'onde de 1460 nm, une dispersion chromatique supérieure à 2 ps/nm.km.

8. Fibre optique selon l'une quelconque des revendications précédentes, **caractérisée en ce que** les rayons et les indices de chacune des tranches sont déterminés de manière à ce que la fibre optique présente une longueur d'onde de dispersion nulle comprise entre 1375 nm et 1415 nm.

9. Fibre optique selon l'une quelconque des revendications précédentes, **caractérisée en ce qu'**aucune tranche ne présente plusieurs plateaux de valeur d'indice en fonction du rayon.

10. Système de transmission sur une distance inférieure à 350 km, comportant au moins une fibre optique selon l'une quelconque des revendications précédentes et ne comportant pas de moyens de compensation de dispersion chromatique de ladite fibre optique.

11. Système de transmission selon la revendication 10, **caractérisé en ce que** la longueur de ladite fibre optique est supérieure à 1 km.

12. Association d'une part d'un réseau de transmission métropolitain sur une distance inférieure à 350 km et d'autre part d'un réseau d'accès, comportant respectivement des fibres optiques de transmission et des fibres optiques d'accès, **caractérisé en ce qu'**au moins certaines des fibres optiques de transmission et au moins certaines des fibres optiques d'accès sont des fibres optiques selon la revendication 6.

## Claims

1. Optical fibre, for a wavelength multiplexing transmission network, comprising successively from the centre towards the periphery a core having a variable index profile and then a cladding of constant index,
the variable index profile of the core being composed, successively from the centre towards the periphery,
of a central portion having a maximum index greater than the index of the cladding,
of a depressed portion having a minimum index less than the index of the cladding, of an annular portion having a maximum index greater than the index of the cladding and less than the maximum index of the central portion, **characterised in that**
the ratio between the absolute value of the minimum index of the depressed portion and the maximum index of the central portion is greater than 50 %,
the index of the central portion is at least 70 % of the maximum index of the central portion at at least one location situated at least 1 µm from the centre of the optical fibre,
the radii and indices of each of the portions being so determined that the optical fibre has,
on the one hand at the wavelength 1550 nm,
firstly a chromatic dispersion between 4 ps/nm.km and 6 ps/nm.km inclusive,
secondly a chromatic dispersion slope between 0.02 ps/nm².km and 0.04 ps/nm².km inclusive,
thirdly a ratio between the chromatic dispersion and the chromatic dispersion slope which is less than 240 nm,
fourthly an effective area greater than 50 µm²
and, on the other hand,
firstly a zero-dispersion wavelength of less than 1460 nm,
secondly a cut-off wavelength in cable of less than 1450 nm,
the radius (r₁) of the central portion being between 3.47 µm and 3.69 µm inclusive, the radius (r₂) of the depressed portion (r₂) being between 5.48 µm and 6.35 µm inclusive and the radius (r₃) of the annular portion (r₃) being between 8.54 µm and 10.00 µm inclusive.

2. Optical fibre according to claim 1, **characterised in that** the ratio between the absolute value of the minimum index of the depressed portion and the maximum index of the central portion is between 60 % and 90 % inclusive.

3. Optical fibre according to claim 1 or 2, **characterised in that** the maximum index of the annular portion is less than 3 x 10⁻³.

4. Optical fibre according to any one of the preceding claims, **characterised in that** the radii and indices of each of the portions are so determined that the optical fibre has, at the wavelength 1550 nm, a chromatic dispersion slope between 0.025 ps/nm².km and 0.035 ps/nm².km inclusive.

5. Optical fibre according to any one of the preceding claims, **characterised in that** the radii and indices of each of the portions are so determined that the optical fibre has, at the wavelength 1550 nm, a chromatic dispersion between 4.5 ps/nm.km and 5.5 ps/nm.km inclusive.

6. Optical fibre according to any one of the preceding claims, **characterised in that** the radii and indices of each of the portions are so determined that the optical fibre has a cut-off wavelength in cable of less than 1260 nm.

7. Optical fibre according to any one of the preceding claims, **characterised in that** the radii and indices of each of the portions are so determined that the optical fibre has, at the wavelength 1460 nm, a chromatic dispersion greater than 2 ps/nm.km.

8. Optical fibre according to any one of the preceding claims, **characterised in that** the radii and indices of each of the portions are so determined that the optical fibre has a zero-dispersion wavelength of between 1375 nm and 1415 nm inclusive.

9. Optical fibre according to any one of the preceding claims, **characterised in that** no portion has a plurality of plateaus of index values as a function of the radius.

10. System for transmission over a distance of less than 350 km, comprising at least one optical fibre according to any one of the preceding claims and not comprising means for compensation of chromatic dispersion of said optical fibre.

11. Transmission system according to claim 10, **characterised in that** the length of said optical fibre is greater than 1 km.

12. Association of, on the one hand, a metropolitan transmission network over a distance of less than 350 km and, on the other hand, an access network, respectively comprising transmission optical fibres and access optical fibres, **characterised in that** at least some of the transmission optical fibres and at least some of the access optical fibres are optical fibres according to claim 6.

## Patentansprüche

1. Optische Faser für ein Übertragungsnetz mit Wellenlängenmultiplexen, umfassend aufeinanderfolgend vom Mittelpunkt zum Rand einen Kern mit variablem Indexprofil gefolgt von einer Hülle mit konstantem Index,
wobei das variable Indexprofil des Kerns vom Mittelpunkt zum Rand aufeinanderfolgend gebildet ist durch:
einen zentralen Abschnitt mit maximalem Index größer als der Index der Hülle,
einen vergrabenen Abschnitt mit minimalem Index kleiner als der Index der Hülle,
einem ringförmigen Abschnitt mit maximalem Index größer als der Index der Hülle und kleiner als der maximale Index des zentralen Abschnitts, **dadurch gekennzeichnet, dass**
das Verhältnis des Absolutwerts des minimalen Index des vergrabenen Abschnitts zu dem maximalen Index des zentralen Abschnitts größer als 50% ist,
der Index des zentralen Abschnitts mindestens 70% des maximalen Index des zentralen Abschnitts an mindestens einem Ort, welcher mindestens 1 µm vom Mittelpunkt der optischen Faser entfernt ist, beträgt,
die Radien und die Indizes jedes Abschnitts in einer Weise bestimmt sind, dass die optische Faser
auf der einen Seite bei der Wellenlänge von 1550 nm,
erstens eine zwischen 4 ps/nm·km und 6 ps/nm·km enthaltene chromatische Dispersion,
zweitens eine zwischen 0,02 ps/nm²·km und 0,04 ps/nm²·km enthaltene Steigung der chromatischen Dispersion,
drittens ein Verhältnis der chromatischen Dispersion zu der Steigung der chromatischen Dispersion kleiner als 240 nm,
viertens eine effektive Oberfläche größer als 50 µm²,
und auf der anderen Seite
erstens eine Wellenlänge mit Dispersion Null kleiner als 1460 nm,
zweitens eine Abschneidewellenlänge im Kabel kleiner als 1450 nm aufweist, wobei der Radius (r₁) des zentralen Abschnitts zwischen 3,47 µm und 3,69 µm enthalten ist, der Radius (r₂) des vergrabenen Abschnitts (r₂) zwischen 5,48 µm und 6,35 µm enthalten ist und der Radius (r₃) des ringförmigen Abschnitts (r₃) zwischen 8,54 µm und 10,00 µm enthalten ist.

2. Optische Faser gemäß Anspruch 1, **dadurch gekennzeichnet, dass** das Verhältnis des Absolutwerts des minimalen Index des vergrabenen Abschnitts zu dem maximalen Index des zentralen Abschnitts zwischen 60% und 90% enthalten ist.

3. Optische Faser gemäß Anspruch 1 oder 2, **dadurch gekennzeichnet, dass** der maximale Index des vergrabenen Abschnitts kleiner als 3·10⁻³ ist.

4. Optische Faser gemäß einem der vorhergehenden Ansprüche, **dadurch gekennzeichnet, dass** die Radien und die Indizes jedes Abschnitts in einer Weise bestimmt sind, dass die optische Faser bei der Wellenlänge von 1550 nm eine zwischen 0,025 ps/nm²·km und 0,035 ps/nm²·km enthaltene Steigung der chromatischen Dispersion aufweist.

5. Optische Faser gemäß einem der vorhergehenden Ansprüche, **dadurch gekennzeichnet, dass** die Radien und die Indizes jedes Abschnitts in einer Weise bestimmt sind, dass die optische Faser bei der Wellenlänge von 1550 nm eine zwischen 4,5 ps/nm·km und 5,5 ps/nm·km enthaltene chromatische Dispersion aufweist.

6. Optische Faser gemäß einem der vorhergehenden Ansprüche, **dadurch gekennzeichnet, dass** die Radien und die Indizes jedes Abschnitts in einer Weise bestimmt sind, dass die optische Faser eine Abschneidewellenlänge im Kabel kleiner als 1260 nm aufweist.

7. Optische Faser gemäß einem der vorhergehenden Ansprüche, **dadurch gekennzeichnet, dass** die Radien und die Indizes jedes Abschnitts in einer Weise bestimmt sind, dass die optische Faser bei der Wellenlänge von 1460 nm eine chromatische Dispersion größer als 2 ps/nm·km aufweist.

8. Optische Faser gemäß einem der vorhergehenden Ansprüche, **dadurch gekennzeichnet, dass** die Radien und die Indizes jedes Abschnitts in einer Weise bestimmt sind, dass die optische Faser eine Wellenlänge mit Dispersion Null aufweist, welche zwischen 1375 nm und 1415 nm enthalten ist.

9. Optische Faser gemäß einem der vorhergehenden Ansprüche, **dadurch gekennzeichnet, dass** kein Abschnitt in Abhängigkeit vom Radius mehrere Plateaus des Indexwertes aufweist.

10. Übertragungssystem über eine Entfernung kleiner als 350 km, umfassend mindestens eine optische Faser gemäß einem der vorhergehenden Ansprüche und nicht umfassend Mittel zur Kompensation der chromatischen Dispersion der optischen Faser.

11. Übertragungssystem gemäß Anspruch 10, **dadurch gekennzeichnet, dass** die Länge der optischen Faser größer als 1 km ist.

12. Verknüpfung eines Teils eines Metropolitan Area Networks auf der einen Seite über eine Entfernung kleiner als 350 km mit einem Zugangsnetzwerk auf der anderen Seite, umfassend jeweils optische Fasern zur Übertragung und optische Fasern zum Zugang, **dadurch gekennzeichnet, dass** zumindest manche der optischen Fasern zur Übertragung und zumindest manche der optischen Fasern zum Zugang optische Fasern gemäß Anspruch 6 sind.
